# EUROPEAN PATENT APPLICATION

(11) **EP 4 834 476 A1**
(43) Date of publication of application: **04.11.2026**
(21) Application number: 26174425.4
(22) Date of filing: 24.04.2026
(51) Int. Cl.: B01L 3/00

(54) **CONTACTLESS PARTICLE PROCESSING APPARATUS AND PARTICLE ACCOMMODATING DEVICE**

(30) Priority: 28.04.2025 US 202563795754 P
(71) Applicant: Cytoaurora Biotechnologies, Inc., Zhubei City, Hsinchu County (TW)
(72) Inventor: HUANG, Chung-Er, Zhubei City, Hsinchu County (TW); CHEN, Chien-Hung, Zhubei City, Hsinchu County (TW); HUANG, Yen-Sen, Zhubei City, Hsinchu County (TW); HUANG, Yun-Yen, Zhubei City, Hsinchu County (TW)
(74) Representative: Viering, Jentschura & Partner mbB Patent- und Rechtsanwälte

(57) **Abstract**

A contactless particle processing apparatus (100) and a particle accommodating device (1). The particle accommodating device (1) receives a liquid specimen (S), and includes a light sensing structure (11) and a capturing structure (12) detachably disposed on the light sensing structure (11). The light sensing structure (11) includes a plurality of charge concentration regions (T3) spaced apart from each other. The capturing structure (12) includes a cover (121) and a plurality of capturing tubes (122) connected to the cover (121). An opening (1222) of each of the capturing tubes (122) is disposed adjacent to one of the charge concentration regions (T3). When the light sensing structure (11) is operated to generate charges concentrated in a selected one of the charge concentration regions (T3), at least one particle (P) of the liquid specimen (S) is moved and positioned at the selected one of the charge concentration regions (T3) in an electrostatic adsorption manner and is moved into a corresponding one of the capturing tubes (122).

## Description

### FIELD OF THE INVENTION

The present invention relates to a particle processing device, and more particularly to a contactless particle processing apparatus and a particle accommodating device.

### BACKGROUND OF THE INVENTION

A conventional particle processing device can drive a target particle to move and be captured by applying an electric field. However, how to accurately capture the target particle without contacting the target particle is a direction towards which the conventional particle processing device needs to be further improved and refined.

### SUMMARY OF THE INVENTION

In response to the above-referenced technical inadequacies, the present invention provides a contactless particle processing apparatus and a particle accommodating device for effectively improving on the issues associated with conventional particle processing devices.

In order to solve the above-mentioned problems, one of the technical aspects adopted by the present invention is to provide a contactless particle processing apparatus, which includes a particle accommodating device and a light driving device that faces the particle accommodating device. The particle accommodating device is configured to accommodate a liquid specimen containing a plurality of particles. The particle accommodating device includes a light sensing structure and a capturing structure that is detachably disposed on the light sensing structure to be in a capturing state. The light sensing structure including a first substrate, a first electrode layer formed on the first substrate, a photoelectric layer formed on the first substrate, and an insulation layer that is formed on the photoelectric layer. The insulation layer includes a basal layer embedded in the photoelectric layer and a protruding layer that is connected to the basal layer and that at least partially protrudes from the photoelectric layer. The protruding layer has a plurality of charge concentration regions spaced apart from each other. The capturing structure includes a cover and a plurality of capturing tubes. The cover faces the light sensing structure and has a plurality of thru-holes. Each of the plurality of capturing tubes has a first opening and a second opening that is opposite to the first opening. The first openings of the plurality of capturing tubes are fixed on the cover and are respectively in spatial communication with the plurality of thru-holes, and the second openings of the plurality of capturing tubes are respectively disposed above and located adjacent to the plurality of charge concentration regions. When the photoelectric layer is operated to generate a plurality of charges concentrated in a selected one of the plurality of charge concentration regions, at least one of the particles is moved and positioned at the selected one of the plurality of charge concentration regions in an electrostatic adsorption manner and is defined as a target particle, and the target particle is moved into one of the plurality of capturing tubes corresponding to the selected one of the plurality of charge concentration regions.

In order to solve the above-mentioned problems, another one of the technical aspects adopted by the present invention is to provide a particle accommodating device configured to accommodate a liquid specimen containing a plurality of particles. The particle accommodating device includes a light sensing structure and a capturing structure that is detachably disposed on the light sensing structure to be in a capturing state. The light sensing structure includes a first substrate, a first electrode layer formed on the first substrate, a photoelectric layer formed on the first substrate, and an insulation layer that is formed on the photoelectric layer. The insulation layer has a plurality of charge concentration regions spaced apart from each other. The capturing structure includes a cover and a plurality of capturing tubes. The cover faces the light sensing structure and has a plurality of thru-holes. Each of the plurality of capturing tubes has a first opening and a second opening that is opposite to the first opening. The first openings of the plurality of capturing tubes are fixed on the cover and are respectively in spatial communication with the plurality of thru-holes, and the second openings of the plurality of capturing tubes are respectively disposed above and arranged adjacent to the plurality of charge concentration regions. When the photoelectric layer is operated to generate a plurality of charges concentrated in a selected one of the plurality of charge concentration regions, at least one of the particles is moved and positioned at the selected one of the plurality of charge concentration regions in the electrostatic adsorption manner and is defined as a target particle, and the target particle is moved into one of the plurality of capturing tubes corresponding to the selected one of the plurality of charge concentration regions.

Therefore, in the contactless particle processing apparatus and the particle accommodating device provided by the present invention, the light sensing structure is formed with the charge concentration regions corresponding to the capturing tubes, such that the target particle can be moved and accurately positioned in the electrostatic adsorption manner, thereby allowing the target particle to be captured into the capturing tube without being harmed (without being exposed to light), which facilitates subsequent operations on the target particle.

These and other aspects of the present invention will become apparent from the following description of the embodiment taken in conjunction with the following drawings and their captions, although variations and modifications therein can be effected without departing from the scope of the novel concepts of the invention.

### BRIEF DESCRIPTION OF THE DRAWINGS

The described embodiments can be better understood by reference to the following description and the accompanying drawings, in which:
FIG. 1 is a schematic perspective view of a contactless particle processing apparatus when a liquid specimen is omitted according to a first embodiment of the present invention;
FIG. 2 is a schematic perspective cross-sectional view of FIG. 1;
FIG. 3 is a schematic cross-sectional view taken along line III-III of FIG. 1;
FIG. 4 is a schematic view of a variation of FIG. 3;
FIG. 5 is a schematic cross-sectional view taken along line V-V of FIG. 1;
FIG. 6 is a schematic enlarged view of region VI of FIG. 5;
FIG. 7 is a schematic planar view of FIG. 2;
FIG. 8 is a schematic enlarged view of region VIII of FIG. 7;
FIG. 9 is a schematic view showing subsequent operation of the contactless particle processing apparatus shown in FIG. 8;
FIG. 10 is a schematic cross-sectional view showing a capturing structure separated from a light sensing structure according to the first embodiment of the present invention;
FIG. 11 is a schematic partial cross-sectional view of the contactless particle processing apparatus according to a second embodiment of the present invention;
FIG. 12 is a schematic perspective cross-sectional view of the contactless particle processing apparatus according to a third embodiment of the present invention.
FIG. 13 is a schematic planar view of FIG. 12; and
FIG. 14 is a schematic cross-sectional view showing the capturing structure separated from the light sensing structure according to the third embodiment of the present invention.

### DETAILED DESCRIPTION OF THE EXEMPLARY EMBODIMENTS

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [First Embodiment]

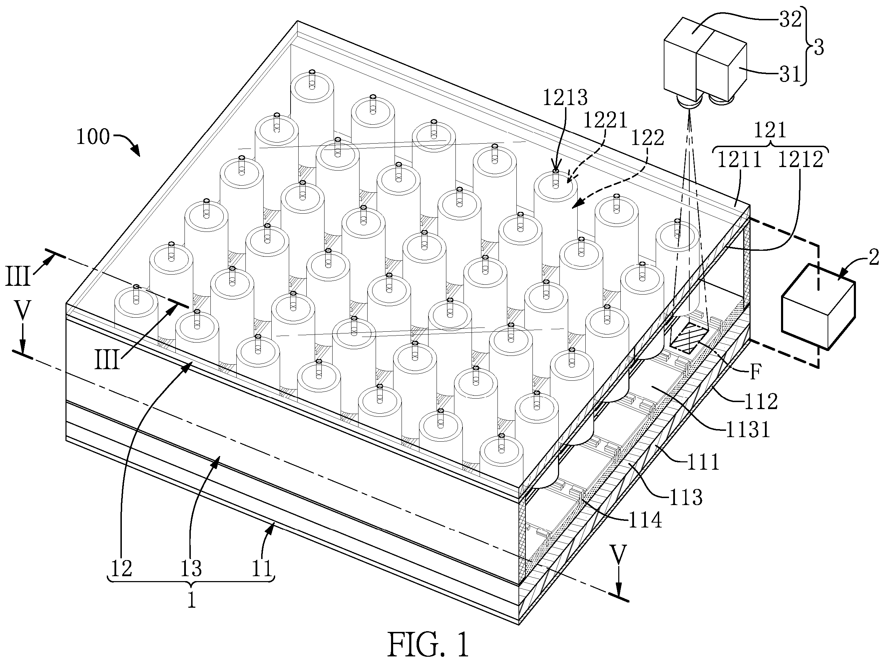

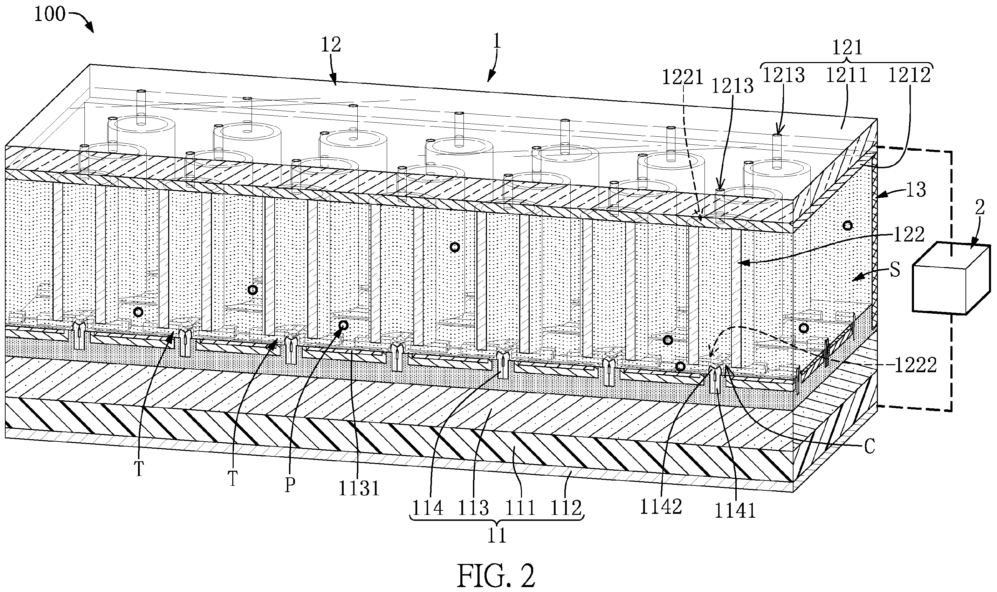

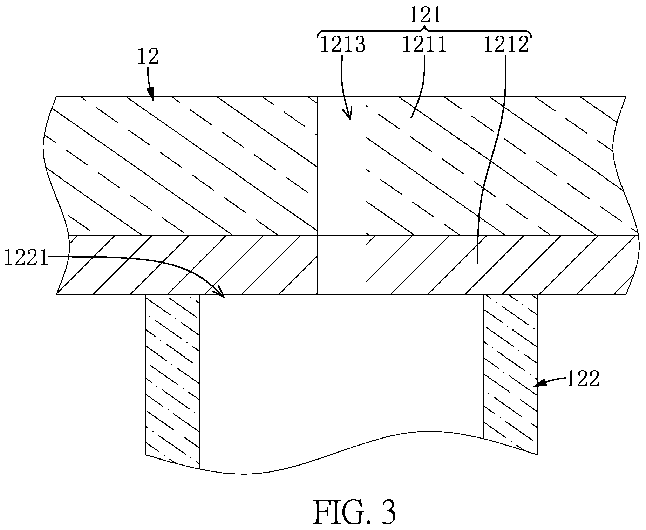

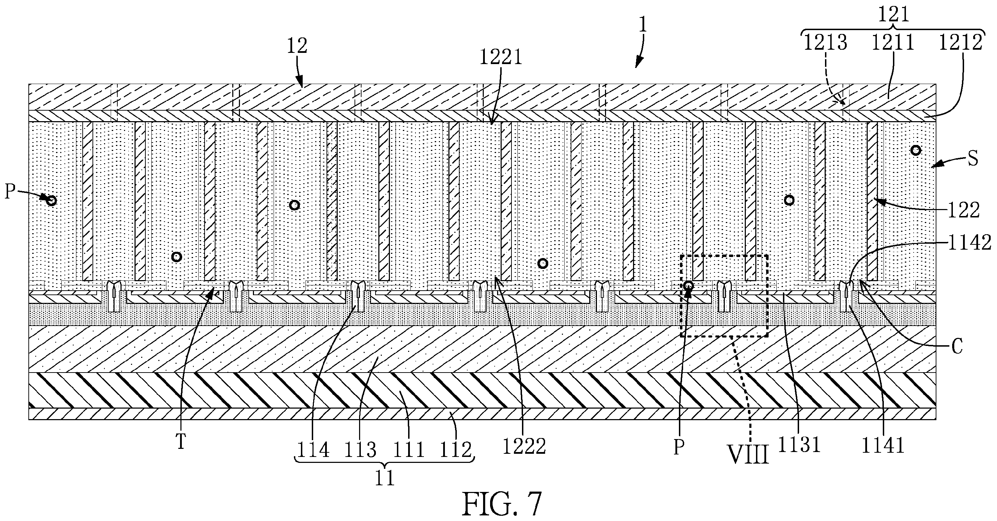

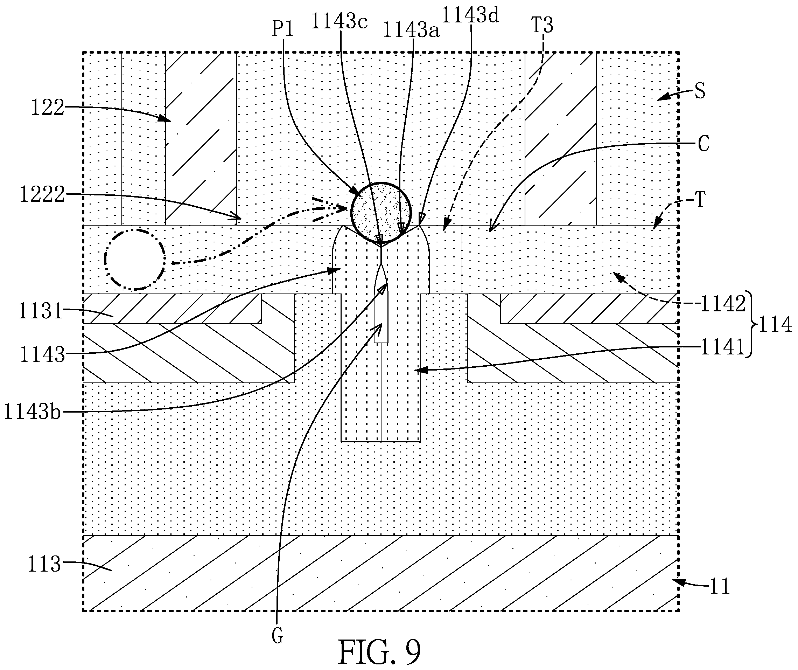

Referring to FIG. 1 to FIG. 10, a first embodiment of the present invention is provided. As shown in FIG. 1 and FIG. 2, the present embodiment provides a contactless particle processing apparatus 100, which includes a particle accommodating device 1, an alternating current (AC) device 2 electrically coupled to the particle accommodating device 1, and a light driving device 3 that faces the particle accommodating device 1, but the present invention is not limited thereto. For example, in other embodiments of the present invention not shown in the drawings, the particle accommodating device 1 can be independently used (e.g., sold) or can be used in cooperation with other components.

In the present embodiment, the particle accommodating device 1 has a rectangular configuration of chip-scale size, and the particle accommodating device 1 is configured to accommodate a liquid specimen S that contains a plurality of particles P, but the present invention is not limited thereto. For example, a quantity of the particles P contained in the liquid specimen S can also be adjusted according to practical requirements (e.g., the quantity of the particles P is at least one).

Furthermore, the particles P in the present embodiment are described as biological particles. Specifically, the liquid specimen S can be a bodily fluid specimen from an animal (e.g., blood, lymph fluid, saliva, or urine), and the particles P can be specific types of cells or cell clusters, such as circulating tumor cells (CTC), fetal nucleated red blood cells (FNRBCs), or bacteria, but the present invention is not limited thereto. For example, in other embodiments of the present invention not shown in the drawings, the liquid specimen S can also be a liquid specimen from a plant. In addition, the particles P can also be plastic particles according to practical requirements for adsorbing viruses, bacteria, or exosomes.

As shown in FIG. 1 to FIG. 6, the particle accommodating device 1 in the present embodiment includes a light sensing structure 11 and a capturing structure 12 that is detachably disposed on the light sensing structure 11. The light sensing structure 11 has a first substrate 111, a first electrode layer 112 formed on the first substrate 111, a photoelectric layer 113 formed on the first substrate 111, and an insulation layer 114 that is formed on the photoelectric layer 113.

In the present embodiment, the first electrode layer 112 is formed on a bottom side of the first substrate 111, the photoelectric layer 113 is formed on a top side of the first substrate 111, and the photoelectric layer 113 is formed with a plurality of transistors 1131 arranged in a matrix configuration. The transistors 1131 can be spaced apart from each other for allowing any one of the transistors 1131 to be independently controlled. The photoelectric layer 113 can adopt an NPN transistor configuration, a PNP transistor configuration, an NP diode configuration, or a PN diode configuration according to practical requirements, but the present invention is not limited thereto.

The capturing structure 12 in the present embodiment includes a cover 121 facing the light sensing structure 11, a plurality of capturing tubes 122 connected to the cover 121, and a bonding layer 13 that is connected to the cover 121 and that surrounds the capturing tubes 122. The bonding layer 13 is bonded to a peripheral edge of the light sensing structure 11 and a peripheral edge of the cover 121, so that the capturing structure 12 is fixed to the light sensing structure 11 to be in a capturing state.

Furthermore, the cover 121 has a plurality of thru-holes 1213, and an inner diameter of each of the thru-holes 1213 is less than a dimension of any one of the particles P, so as to allow gas to pass through any one of the thru-holes 1213 while preventing liquid (e.g., the liquid specimen S) from flowing through any one of the thru-holes 1213. In the present embodiment, two ends of each of the thru-holes 1213 can further be respectively covered with two waterproof and breathable films 1214, and each of the two waterproof and breathable films 1214 has perforations with an inner diameter that is not greater than 0.2 µm, so as to allow gas to pass therethrough while preventing liquid (e.g., the liquid specimen S) from flowing therethrough, but the present invention is not limited thereto.

At least one of the light sensing structure 11 and the cover 121 of the capturing structure 12 is transparent. In the present embodiment, the light sensing structure 11 and the cover 121 of the capturing structure 12 are two plate-shaped structures that are parallel to each other and that are spaced apart from each other by a distance being greater than a dimension of any one of the particles P, but the present invention is not limited thereto.

Specifically, the cover 121 in the present embodiment includes a second substrate 1211 and a second electrode layer 1212 that is formed on the second substrate 1211. The second electrode layer 1212 faces the light sensing structure 11 (e.g., the photoelectric layer 113 and the insulation layer 114). The second electrode layer 1212 is electrically coupled to the first electrode layer 112 (e.g., the AC device 2 is electrically coupled to the first electrode layer 112 and the second electrode layer 1212), such that the light sensing structure 11 can be illuminated by light emitted from the light driving device 3 to form a dielectrophoresis (DEP) pattern F for moving any one of the particles P. For example, the light driving device 3 includes a camera 31 and a light source 32 that is in cooperation with the camera 31, and the light sensing structure 11 (or the photoelectric layer 113) can be illuminated by light emitted from the light source 32 to form the DEP pattern F.

The insulation layer 114 includes a plurality of charge concentration regions T3 that are spaced apart from each other and that protrude from the photoelectric layer 113. In the present embodiment, the charge concentration regions T3 respectively correspond in position to the transistors 1131, and each of the charge concentration regions T3 is configured to be independently controlled by at least one of the transistors 1131 corresponding in position thereto (e.g., each of the charge concentration regions T3 correspond in position to four of the transistors 1131). It should be noted that the configuration and arrangement of the charge concentration regions T3 can be adjusted and changed according to practical requirements. The following description describes possible configurations, but the present invention is not limited thereto.

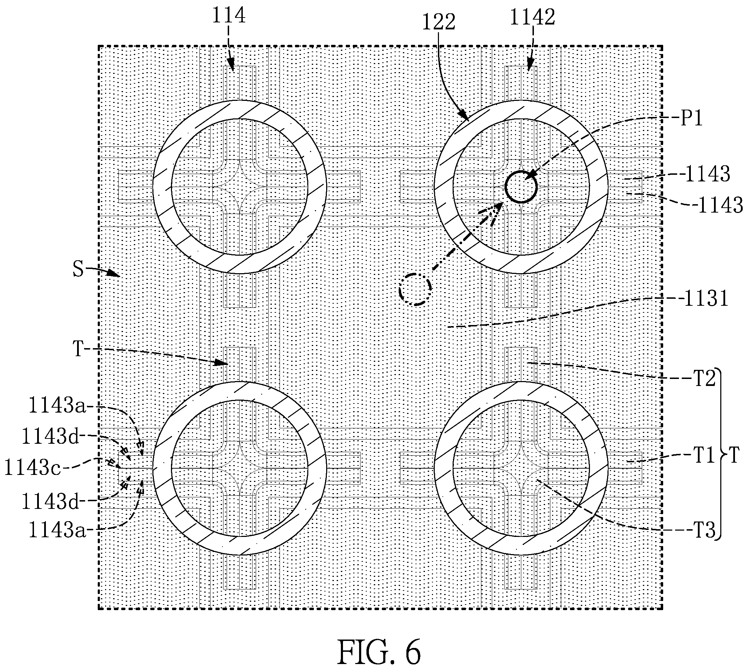

As shown in FIG. 6 to FIG. 8, the insulation layer 114 includes a basal layer 1141 embedded in the photoelectric layer 113 and a protruding layer 1142 that is connected to the basal layer 1141 and that at least partially protrudes from the photoelectric layer 113. The protruding layer 1142 has the charge concentration regions T3 spaced apart from each other. In the present embodiment, the protruding layer 1142 includes a plurality of unit zones T separated from each other, and each of the unit zones T is disposed above at least one of the transistors 1131 corresponding in position thereto, but the present invention is not limited thereto. For example, in other embodiments of the present invention not shown in the drawings, the unit zones T can also be connected to each other, and each of the unit zones T corresponds in position to and is disposed above one of the transistors 1131.

Specifically, in the present embodiment, each of the unit zones T has a transversal channel T1 and a longitudinal channel T2 that intersects (perpendicularly) with the transversal channel T1, and an intersection of the transversal channel T1 and the longitudinal channel T2 of each of the unit zones T is defined as one of the charge concentration regions T3.

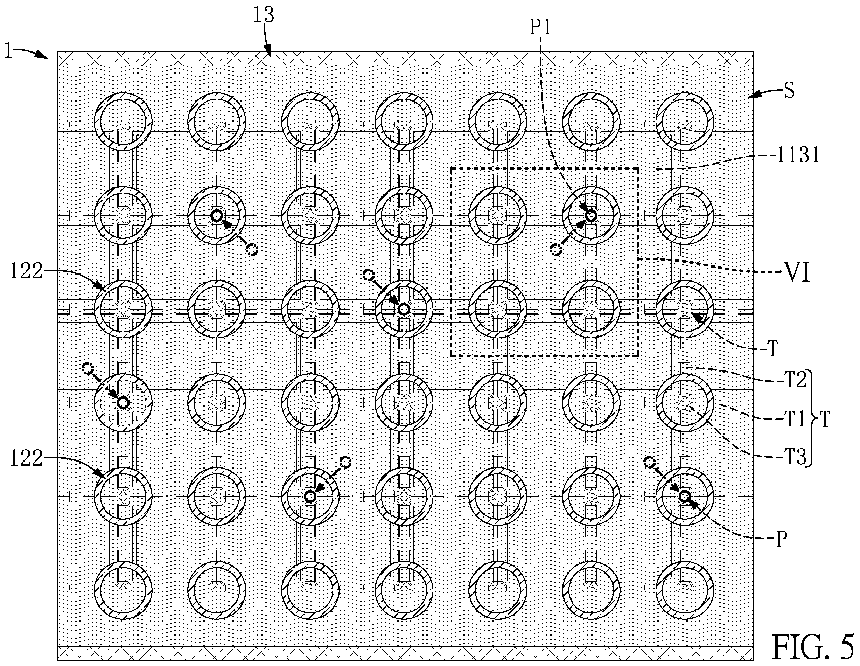

It should be noted that the following description describes the structure of the insulation layer 114 from different angles (e.g., cross-sectional view or top view), and the insulation layer 114 can be designed by using structures described from specific angles according to practical requirements. Specifically, the insulation layer 114 as shown in the cross-sectional view of FIG. 5 includes the unit zones T having a substantially same structure. For ease of understanding, the following description only describes some of the unit zones T of the insulation layer 114 shown in FIG. 5, but the present invention is not limited thereto. For example, in other embodiments of the present invention not shown in the drawings, the unit zones T of the insulation layer 114 can be formed of different structures.

In FIG. 6 to FIG. 9 of the present embodiment, the unit zone T includes two arms 1143 extending from the basal layer 1141, and a gap G is formed between inner surfaces 1143b of the two arms 1143. Moreover, free end surfaces 1143a of the two arms 1143 are located outside of the photoelectric layer 113 and are in contact with each other, such that the gap G is enclosed by the inner surfaces 1143b of the two arms 1143 and the basal layer 1141.

In the present embodiment, any one of the transversal channel T1 and the longitudinal channel T2 is formed by two of the arms 1143. In other words, at the intersection of the transversal channel T1 and the longitudinal channel T2, the free end surfaces 1143a of the arms 1143 jointly form the charge concentration region T3. Accordingly, when the photoelectric layer 113 is operated to generate a plurality of charges, the charge concentration region T3 has a greatest charge density in the light sensing structure 11, which facilitates positioning of at least one of the particles P in an electrostatic adsorption manner.

Specifically, each of the two arms 1143 includes an inner corner 1143c and an outer corner 1143d respectively located on two opposite sides of the free end surface 1143a, and height positions of the two inner corners 1143c are different from (e.g., lower than) height positions of the two outer corners 1143d, and the two arms 1143 are in contact with each other at the two inner corners 1143c. Accordingly, since each of the two arms 1143 is formed with the inner corner 1143c and the outer corner 1143d, this facilitates concentration of the charges at the inner corner 1143c and the outer corner 1143d of each of the arms 1143.

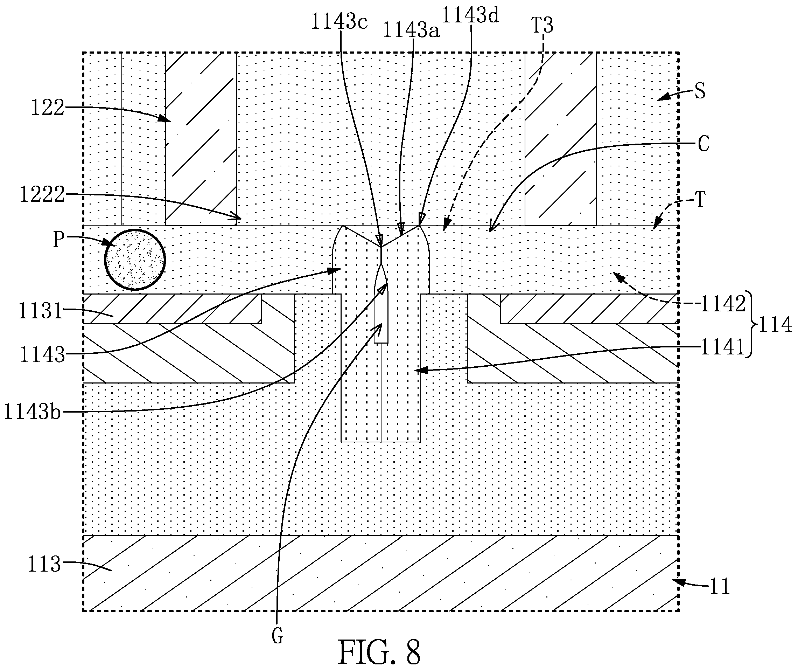

Referring to FIG. 6 and FIG. 8 together, any one of the transversal channel T1 and the longitudinal channel T2 has two inner corners 1143c arranged adjacent to each other and two outer corners 1143d that are located on outer sides of the two inner corners 1143c. Furthermore, in any one of the transversal channel T1 and the longitudinal channel T2, the height positions of the two inner corners 1143c are different from (e.g., lower than) the height positions of the two outer corners 1143d.

In addition, the capturing tubes 122 in the present embodiment adopt transparent cylindrical structures that are substantially identical to each other, and each of the capturing tubes 122 has a first opening 1221 and a second opening 1222 that is opposite to the first opening 1221, but the present invention is not limited thereto. For example, in other embodiments of the present invention not shown in the drawings, the capturing tubes 122 can also adopt slightly different structures according to practical requirements.

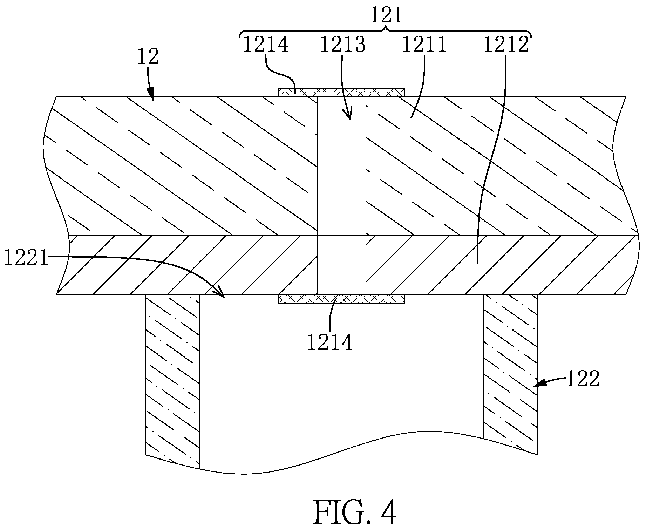

In the present embodiment, the first openings 1221 of the capturing tubes 122 are fixed on the cover 121 and are respectively in spatial communication with the thru-holes 1213, and the second openings 1222 of the capturing tubes 122 are respectively disposed above and arranged adjacent to the charge concentration regions T3. Specifically, a tube diameter of each of the capturing tubes 122 is greater than a dimension of any one of the particles P, and each of the capturing tubes 122 is perpendicularly connected to the cover 121 (e.g., the second electrode layer 1212). Each of the first openings 1221 and the corresponding thru-hole 1213 (as shown in FIG. 4) can be provided with one of the two waterproof and breathable films 1214 therebetween, so as to allow gas to flow therein by passing through the one of the two waterproof and breathable films 1214.

Furthermore, the second openings 1222 of the capturing tubes 122 are in a substantially coplanar arrangement, and the second opening 1222 of each of the capturing tubes 122 can abut against or be adjacent to one of the unit zones T so as to cover an entirety of the corresponding charge concentration region T3. In other words, an interval C sufficient for the particle P to move is maintained between the second opening 1222 of the capturing tube 122 and the outer surface of the transistor 1131, so that the particle P can enter the capturing tube 122 by traveling through the interval C and the second opening 1222 along the outer surface of the transistor 1131.

Based on the above, when the photoelectric layer 113 is operated to generate a plurality of charges concentrated in a selected one of the charge concentration regions T3, a charge density of the selected one of the charge concentration regions T3 is greater than a charge density of an outer surface of the photoelectric layer 113 (e.g., the corresponding transistor 1131), at least one of the particles P is moved and positioned at the selected one of the charge concentration regions T3 in the electrostatic adsorption manner and is defined as a target particle P1, and the target particle P1 is moved into the capturing tube 122 corresponding to the selected one of the charge concentration regions T3.

Accordingly, in the contactless particle processing apparatus 100 (or the particle accommodating device 1), the light sensing structure 11 is formed with the charge concentration regions T3 corresponding to the capturing tubes 122, such that the target particle P1 can be moved and accurately positioned in the electrostatic adsorption manner, thereby allowing the target particle P1 to be captured into the capturing tube 122 without being harmed (without being exposed to light), which facilitates subsequent operations on the target particle P1.

It should be noted that a quantity of the selected charge concentration regions T3 can be more than one according to practical requirements. The photoelectric layer 113 can be operated by receiving an external ambient light to generate the charges concentrated in the selected charge concentration regions T3. Alternatively, the photoelectric layer 113 can be operated by receiving light emitted from the light driving device 3 (as shown in FIG. 1) to generate the charges concentrated in the selected charge concentration regions T3, and the present invention is not limited thereto.

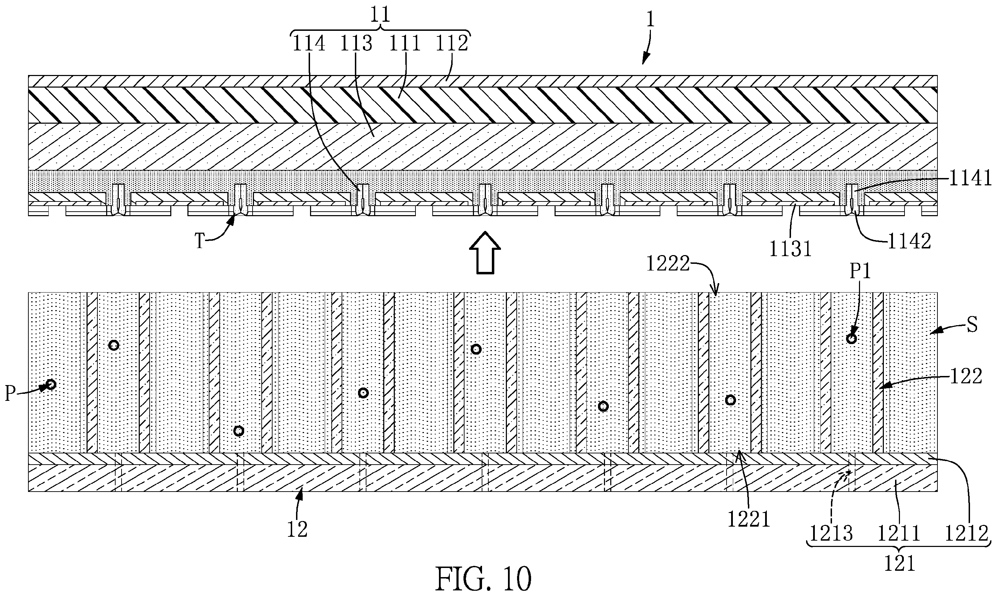

In addition, as shown in FIG. 10, when the target particle P1 is moved into the corresponding capturing tube 122, the capturing structure 12 is configured to be flipped to orient the second openings 1222 of the capturing tubes 122 upward and is configured to be separated from the light sensing structure 11, so as to be in a culturing state.

### [Second Embodiment]

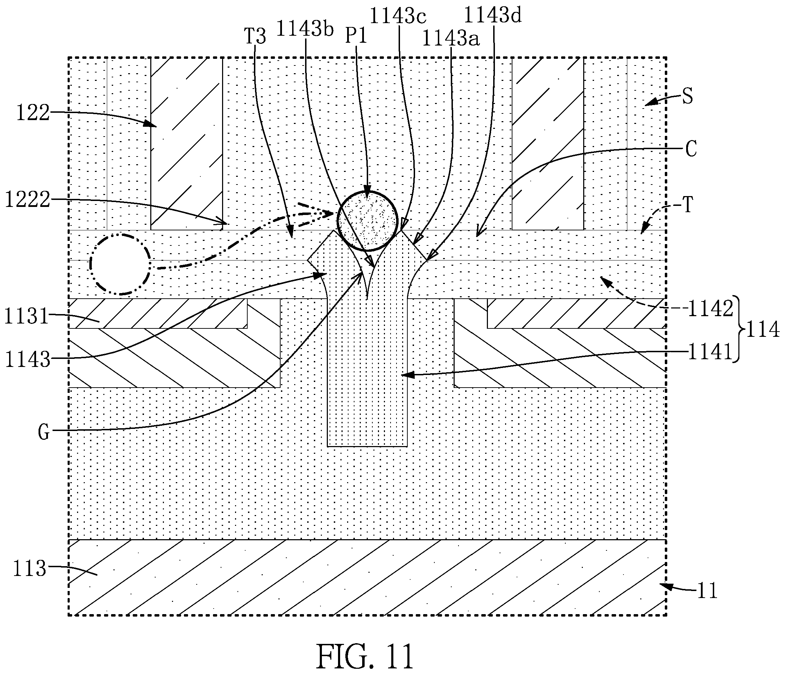

Referring to FIG. 11, a second embodiment of the present invention, which is similar to the first embodiment of the present invention, is provided. For the sake of brevity, descriptions of the same components in the first and second embodiments of the present invention will be omitted herein, and the following description only discloses different features between the first and second embodiments.

In the present embodiment, the free end surfaces 1143a of the two arms 1143 are spaced apart from each other and face away from each other, such that the gap G is in spatial communication with an external environment. In other words, at the intersection of the transversal channel T1 and the longitudinal channel T2, the inner surfaces 1143b of the arms 1143 jointly form the charge concentration region T3.

Specifically, the height positions of the inner corners 1143c of the two arms 1143 are higher than the height positions of the outer corners 1143d of the two arms 1143. In the present embodiment, the two arms 1143 have the two inner corners 1143c facing away from each other, such that the inner surfaces 1143b of the two arms 1143 are substantially V-shaped, thereby allowing the particle P to be partially located within the gap G.

### [Third Embodiment]

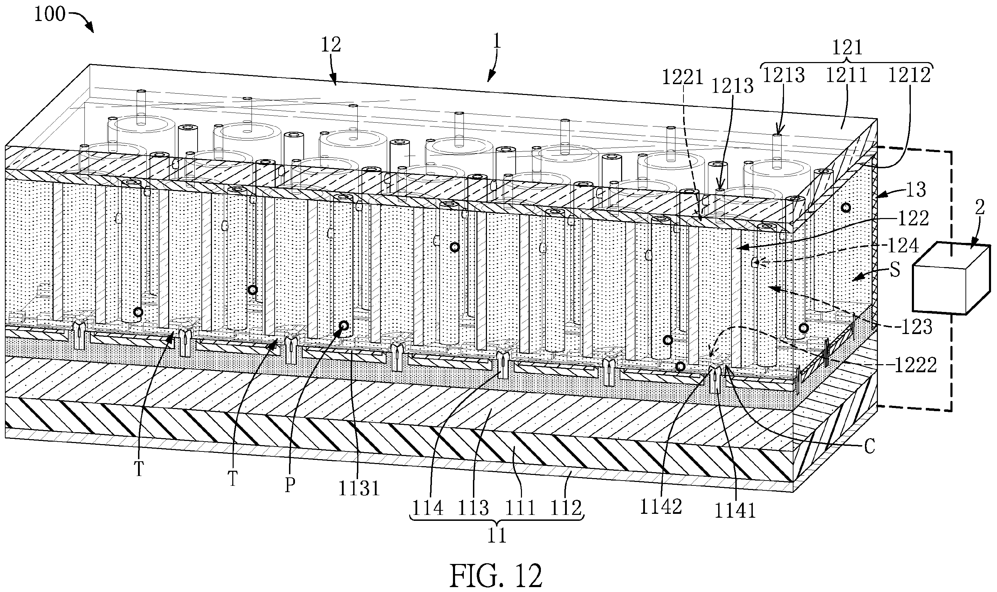

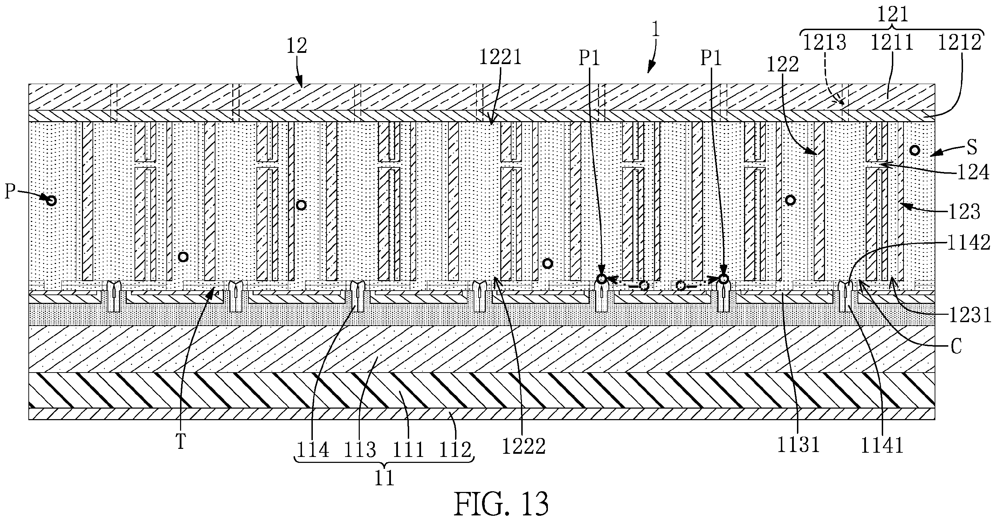

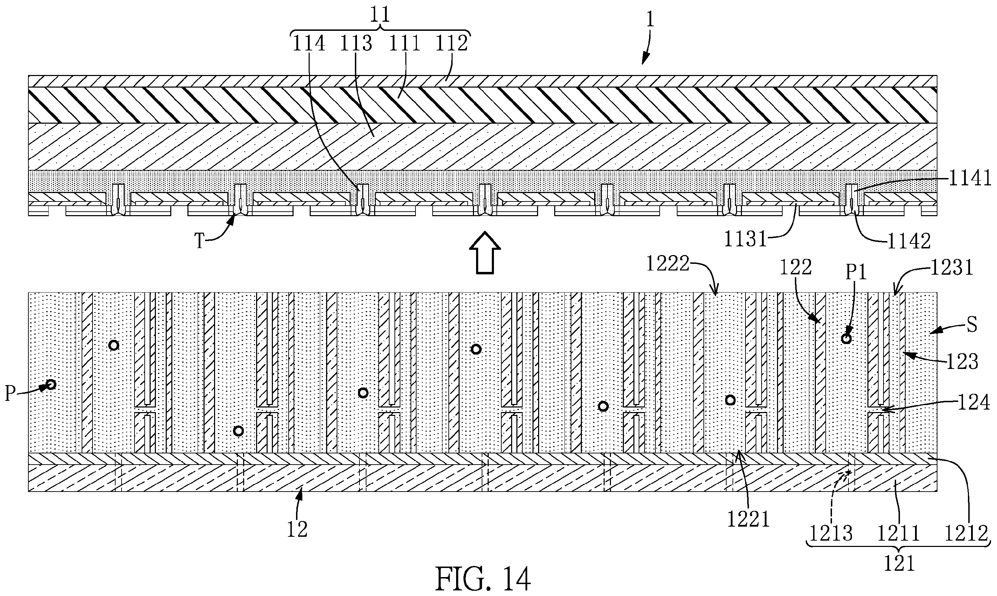

Referring to FIG. 12 to FIG. 14, a third embodiment of the present invention, which is similar to the first and second embodiments of the present invention, is provided. For the sake of brevity, descriptions of the same components in the first to third embodiments of the present invention will be omitted herein, and the following description only discloses different features between the first to third embodiments.

In the present embodiment, the capturing structure 12 further includes a plurality of accommodating tubes 123 and a plurality of connection channels 124. The accommodating tubes 123 can be transparent and are respectively arranged adjacent to the capturing tubes 122, and each of the capturing tubes 122 and an adjacent one of the accommodating tubes 123 are in spatial communication with each other through connection to one of the connection channels 124.

One end of each of the accommodating tubes 123 is (perpendicularly) connected to the cover 121 and is in a closed configuration, and another end of each of the accommodating tubes 123 has an opening 1231. The opening 1231 of each of the accommodating tubes 123 can be coplanar with the second opening 1222 of an adjacent one of the capturing tubes 122. In the present embodiment, an inner diameter of the opening 1231 of each of the accommodating tubes 123 is less than a dimension of any one of the particles P, and the opening 1231 of the accommodating tube 123 can be arranged adjacent to or abut against the longitudinal channel T2 or the transversal channel T1, so as to prevent the particle P from entering into the accommodating tube 123 through the opening 1231.

Based on the above, when the target particle P1 is moved into the corresponding capturing tube 122, a substance released by the target particle P1 can pass through the connection channel 124 and enter the accommodating tube 123, such that the accommodating tube 123 is configured to allow accommodation and observation for the substance released by the target particle P1. An inner diameter of each of the connection channels 124 is less than a dimension of any one of the particles P, so as to effectively prevent the target particle P1 within the capturing tube 122 from entering the accommodating tube 123 via the connection channel 124.

### [Beneficial Effects of the Embodiments]

In conclusion, in the contactless particle processing apparatus and the particle accommodating device provided by the present invention, the light sensing structure is formed with the charge concentration regions corresponding to the capturing tubes, such that the target particle can be moved and accurately positioned in the electrostatic adsorption manner, thereby allowing the target particle to be captured into the capturing tube without being harmed (without being exposed to light), which facilitates subsequent operations on the target particle.

The foregoing description of the exemplary embodiments of the invention has been presented only for the purposes of illustration and description and is not intended to be exhaustive or to limit the invention to the precise forms disclosed. Many modifications and variations are possible in light of the above teaching.

## Claims

1. A contactless particle processing apparatus (100), **characterized by** comprising:
a particle accommodating device (1) configured to accommodate a liquid specimen (S) containing a plurality of particles (P), wherein the particle accommodating device (1) includes:
a light sensing structure (11) including a first substrate (111), a first electrode layer (112) formed on the first substrate (111), a photoelectric layer (113) formed on the first substrate (111), and an insulation layer (114) that is formed on the photoelectric layer (113), wherein the insulation layer (114) includes:
a basal layer (1141) embedded in the photoelectric layer (113); and
a protruding layer (1142) connected to the basal layer (1141) and at least partially protruding from the photoelectric layer (113), wherein the protruding layer (1142) has a plurality of charge concentration regions (T3) spaced apart from each other; and
a capturing structure (12) that is detachably disposed on the light sensing structure (11) to be in a capturing state, wherein the capturing structure (12) includes:
a cover (121) facing the light sensing structure (11) and having a plurality of thru-holes (1213); and
a plurality of capturing tubes (122) each having a first opening (1221) and a second opening (1222) that is opposite to the first opening (1221), wherein the first openings (1221) of the plurality of capturing tubes (122) are fixed on the cover (121) and are respectively in spatial communication with the plurality of thru-holes (1213), and the second openings (1222) of the plurality of capturing tubes (122) are respectively disposed above and located adjacent to the plurality of charge concentration regions (T3); and
a light driving device (3) facing the particle accommodating device (1);
wherein, when the photoelectric layer (113) is operated to generate a plurality of charges concentrated in a selected one of the plurality of charge concentration regions (T3), at least one of the particles (P) is moved and positioned at the selected one of the plurality of charge concentration regions (T3) in electrostatic adsorption manner and is defined as a target particle (P1), and the target particle (P1) is moved into one of the plurality of capturing tubes (122) corresponding to the selected one of the plurality of charge concentration regions (T3).

2. The contactless particle processing apparatus (100) according to claim 1, wherein the photoelectric layer (113) includes a plurality of transistors (1131) spaced apart from each other, and wherein the plurality of charge concentration regions (T3) respectively correspond in position to the plurality of transistors (1131), and each of the plurality of charge concentration regions (T3) is configured to be independently controlled by at least one of the plurality of transistors (1131) corresponding in position thereto.

3. The contactless particle processing apparatus (100) according to claim 1, wherein two ends of each of the plurality of thru-holes (1213) are respectively covered by two waterproof and breathable films (1214).

4. The contactless particle processing apparatus (100) according to claim 3, wherein, when the target particle (P1) is moved into the corresponding capturing tube (122), the capturing structure (12) is configured to be flipped to orient the second openings (1222) of the plurality of capturing tubes (122) upward and is configured to be separated from the light sensing structure (11), so as to be in a culturing state.

5. The contactless particle processing apparatus (100) according to claim 1, wherein the capturing structure (12) further includes:
a plurality of accommodating tubes (123) respectively arranged adjacent to the plurality of capturing tubes (122), wherein one end of each of the plurality of accommodating tubes (123) is connected to the cover (121) and is in a closed configuration, and another end of each of the plurality of accommodating tubes (123) has an opening; and
a plurality of connection channels (124), wherein each of the plurality of capturing tubes (122) and an adjacent one of the plurality of accommodating tubes (123) are in spatial communication with each other through connection to one of the plurality of connection channels (124).

6. The contactless particle processing apparatus (100) according to claim 5, wherein an inner diameter of each of the plurality of connection channels (124) is less than a dimension of any one of the plurality of particles (P), and the opening (1231) of each of the plurality of accommodating tubes (123) is coplanar with the second opening (1222) of an adjacent one of the plurality of capturing tubes (122).

7. The contactless particle processing apparatus (100) according to claim 5, wherein, when the target particle (P1) is moved into the corresponding capturing tube (122), the corresponding accommodating tube (123) is configured to allow accommodation and observation for a substance released by the target particle (P1).

8. The contactless particle processing apparatus (100) according to claim 1, wherein the protruding layer (1142) includes a plurality of unit zones (T) spaced apart from each other, and each of the plurality of unit zones (T) has a transversal channel (T1) and a longitudinal channel (T2) that intersects with the transversal channel (T1), and wherein an intersection of the transversal channel (T1) and the longitudinal channel (T2) of each of the plurality of unit zones (T) is defined as one of the plurality of charge concentration regions (T3).

9. The contactless particle processing apparatus (100) according to claim 1, wherein, when the photoelectric layer (113) is operated to generate the plurality of charges concentrated in the selected one of the plurality of charge concentration regions (T3), a charge density of the selected one of the plurality of charge concentration regions (T3) is greater than a charge density of an outer surface of the photoelectric layer (113).

10. The contactless particle processing apparatus (100) according to claim 1, wherein the cover (121) includes a second substrate (1211) and a second electrode layer (1212) that is formed on the second substrate (1211), and wherein the second electrode layer (1212) is electrically coupled to the first electrode layer (112), such that the light sensing structure (11) is illuminated by light emitted from the light driving device (3) to form a dielectrophoresis pattern (F) for moving any one of the plurality of particles (P).

11. A particle accommodating device (1) configured to accommodate a liquid specimen (S) containing a plurality of particles (P), **characterized by** comprising:
a light sensing structure (11) including a first substrate (111), a first electrode layer (112) formed on the first substrate (111), a photoelectric layer (113) formed on the first substrate (111), and an insulation layer (114) that is formed on the photoelectric layer (113), wherein the insulation layer (114) has a plurality of charge concentration regions (T3) spaced apart from each other; and
a capturing structure (12) that is detachably disposed on the light sensing structure (11) to be in a capturing state, wherein the capturing structure (12) includes:
a cover (121) facing the light sensing structure (11) and having a plurality of thru-holes (1213); and
a plurality of capturing tubes (122) each having a first opening (1221) and a second opening (1222) that is opposite to the first opening (1221), wherein the first openings (1221) of the plurality of capturing tubes (122) are fixed on the cover (121) and are respectively in spatial communication with the plurality of thru-holes (1213), and the second openings (1222) of the plurality of capturing tubes (122) are respectively disposed above and arranged adjacent to the plurality of charge concentration regions (T3);
wherein, when the photoelectric layer (113) is operated to generate a plurality of charges concentrated in a selected one of the plurality of charge concentration regions (T3), at least one of the particles (P) is moved and positioned at the selected one of the plurality of charge concentration regions (T3) in electrostatic adsorption manner and is defined as a target particle (P1), and the target particle (P1) is moved into one of the plurality of capturing tubes (122) corresponding to the selected one of the plurality of charge concentration regions (T3).

12. The particle accommodating device (1) according to claim 11, wherein the photoelectric layer (113) includes a plurality of transistors (1131) spaced apart from each other, and wherein the plurality of charge concentration regions (T3) respectively correspond in position to the plurality of transistors (1131), and each of the plurality of charge concentration regions (T3) is configured to be independently controlled by at least one of the plurality of transistors (1131) corresponding in position thereto.

13. The particle accommodating device (1) according to claim 11, wherein two ends of each of the plurality of thru-holes (1213) are respectively covered with two waterproof and breathable films (1214), and wherein, when the target particle (P1) is moved into the corresponding capturing tube (122), the capturing structure (12) is configured to be flipped to orient the second openings (1222) of the plurality of capturing tubes (122) upward and is configured to be separated from the light sensing structure (11), so as to be in a culturing state.

14. The particle accommodating device (1) according to claim 11, wherein the capturing structure (12) further includes:
a plurality of accommodating tubes (123) respectively arranged adjacent to the plurality of capturing tubes (122), wherein one end of each of the plurality of accommodating tubes (123) is connected to the cover (121) and is in a closed configuration, and another end of each of the plurality of accommodating tubes (123) has an opening (1231); and
a plurality of connection channels (124), wherein each of the plurality of capturing tubes (122) and an adjacent one of the plurality of accommodating tubes (123) are in spatial communication with each other through connection to one of the plurality of connection channels (124).

15. The particle accommodating device (1) according to claim 14, wherein an inner diameter of each of the plurality of connection channels (124) is less than a dimension of any one of the plurality of particles (P), and the opening (1231) of each of the plurality of accommodating tubes (123) is coplanar with the second opening (1222) of an adjacent one of the plurality of capturing tubes (122), and wherein, when the target particle (P1) is moved into the corresponding capturing tube (122), the corresponding accommodating tube (123) is configured to allow accommodation and observation for a substance released by the target particle (P1).
